# EUROPEAN PATENT APPLICATION

(11) **EP 4 331 896 A1**
(43) Date of publication of application: **06.03.2024**
(21) Application number: 22874360.5
(22) Date of filing: 06.07.2022
(51) Int. Cl.: B60L 50/60, B60L 58/10

(54) **BATTERY PACK AND AUTOMOBILE**

(30) Priority: 30.09.2021 CN 202111159489
(71) Applicant: BYD Company Limited, Shenzhen, Guangdong 518118 (CN)
(72) Inventor: ZHANG, Ke, Shenzhen, Guangdong 518118 (CN); E, Congji, Shenzhen, Guangdong 518118 (CN); GUO, Zizhu, Shenzhen, Guangdong 518118 (CN); PAN, Yi, Shenzhen, Guangdong 518118 (CN); LU, Zhipei, Shenzhen, Guangdong 518118 (CN)
(74) Representative: DehnsGermany Partnerschaft von Patentanwälten
(86) International application number: PCT/CN2022/104103
(87) International publication number: WO 2023/050963

(57) **Abstract**

A battery pack and a vehicle are provided. The battery pack is configured to provide electric energy required by the vehicle under different operating conditions. The battery pack includes a task manager, a first battery unit and a second battery unit. The first battery unit and the second battery unit respectively respond to a different operating state of a load and provide the electric energy required under the control of the task manager.

## Description

### CROSS-REFERENCE TO RELATED APPLICATIONS

The present disclosure is proposed on the basis of and claims priority to Chinese Patent Application No. 202111159489.3 filed on, September 30, 2021, the disclosure of which is incorporated herein by reference in its entirety.

### FIELD

The present disclosure relates to the field of power source, and specifically to a battery pack applicable to a powered device and a vehicle.

### BACKGROUND

In related art, the battery assembly currently used in electric vehicles includes generally dozens to hundreds of individual battery cores connected in series, which is combined with a battery management system, (BMS), a thermal management system, and others to power the electric vehicles. However, the powers of input electric energy and output electric energy of the battery assembly required by the electric vehicles have obvious differences under different operating conditions. A battery assembly formed by connecting batteries of the same type and specification in series cannot quickly and accurately meet the requirement for power difference of electric vehicles. As a result, the performance of electric vehicles cannot be completely released.

### SUMMARY

In view of the defects in the related art, an embodiment of the present disclosure provides a battery pack that can quickly and rapidly output different power ranges in response to different operating conditions and a vehicle including the battery pack.

A battery pack includes: a first battery unit, configured to output electric energy in a first power range; and a second battery unit, configured to output electric energy in a second power range; where the second power range is higher than the first power range, and the first battery unit and the second battery unit are adapted to be controlled by a task manager to respectively respond to a different operating state of a load and provide electric energy required by the load.

Under the control of the task manager, the electric energy output from the first battery unit and the second battery unit is accurately controlled. The task manager can quickly and flexibly adjust the electric energy output from the first battery unit and the second battery unit according to a power demand of a present load, so as to meet the power demand of the present load.

In some embodiments, the first battery unit and the second battery unit are adapted to be electrically connected to a battery management system of the task manager, and the battery management system detects state parameters of the first battery unit and the second battery unit, and controls power ranges of input electric energy and output electric energy of the first battery unit and the second battery unit according to the state parameters.

The battery management system can efficiently monitor the electric quantities and operating states of the first battery unit and the second battery unit in real time, and control the power ranges of input electric energy and output electric energy of the first battery unit and the second battery unit according to the electric quantities and operating states so as to maintain a good output state and continuously output electric energy.

In some embodiments, the battery pack further includes a task bus, and the first battery unit and the second battery unit are connected in parallel to the task bus. The task bus is configured to receive a control instruction from the task manager and transmit the control instruction to the first battery unit and the second battery unit, and the first battery unit or the second battery unit is adapted to be activated and output electric energy in the first power range or the second power range after receiving the control instruction, where the control instruction corresponds to a different operating state of the load.

The task manager is electrically connected to the first battery unit and the second battery unit through the task bus, such that the control instruction from the task manager can be quickly transmitted to the first battery unit and the second battery unit. In this way, the response time of the first battery unit and the second battery unit is effectively reduced, and the first battery unit and the second battery unit are enabled to provide the required electric energy to the present load at an extremely high speed.

In some embodiments, when the electric quantity of the first battery unit is greater than a first threshold, the first battery unit is adapted to receive the control instruction and be activated, to provide electric energy to the load.

In some embodiments, when the electric quantity of the first battery unit is lower than a second threshold, the first battery unit receives the control instruction, and is disabled to stop outputting electric energy; and the second battery unit is activated to provide electric energy to the present load.

In some embodiments, when the electric quantity of the first battery unit is less than the first threshold and greater than the second threshold, both the first battery unit and the second battery unit receive the control instruction and are activated, and both the first battery unit and the second battery unit provide electric energy to the load, where the first threshold is greater than the second threshold.

The first battery unit and the second battery unit cooperate with each other to form different power supply modes. The first battery unit and the second battery unit are amenable to strict electric energy output control. By setting the thresholds of electric quantity, the first battery unit and the second battery unit can achieve different combinations of electric energy outputs, such that the first battery unit and the second battery unit can cooperate efficiently with respect to different loads under the control of the task manager.

In some embodiments, the first battery unit includes at least one sub-master pack, the sub-master pack includes at least one first battery core, and the first battery core has a first energy density and a first power density. The second battery unit includes at least one sub-slave pack, the sub-slave pack includes at least one second battery core, and the second battery core has a second energy density and a second power density. The first energy density is greater than the second energy density, and the first power density is less than the second power density.

Since second battery core in the sub-slave pack of the second battery unit has the second energy density and the second power density, and the second power density is greater than the first power density of the first battery core in the first battery unit, the volume of the second battery unit is smaller than that of the first battery unit. Through the reasonable spatial arrangement of the first battery unit and the second battery unit, the volume of the battery pack can be effectively reduced. Therefore, adaptive adjustment can be made according to the internal arrangement of a vehicle to save the internal space of the vehicle.

In some embodiments, the first power range is 10-20 KW, and the second power range is 50-100 KW. Alternatively, the first energy range is 50-100 KWh, and the second energy range is 10-30 KWh.

In some embodiments, the capacity of the second battery core in the second battery unit is 30% of the capacity of the first battery core in the first battery unit, and the specific power of the second battery unit is 1.5 times the specific power of the first battery unit.

By setting the composition and parameters of battery cores in the first battery unit and the second battery unit, the first battery unit and the second battery unit are effectively enabled to cooperate for electric energy output. For different loads and different power demands, the task manager can accurately control the electric energy output states of the first battery unit and the second battery unit. Moreover, with accurate parameter settings, the production consumption of the battery pack can be accurately calculated and the production cost of the battery pack can be reasonably reduced.

In some embodiments, the present disclosure further provides a task manager. The task manager is configured to control a first battery unit and a second battery unit in a battery pack to respectively respond to a different operating state of a load, and control the first battery unit and the second battery unit to provide the electric energy required by the load.

In some embodiments, the task manager includes a battery management system. The battery management system is adapted to be electrically connected to the first battery unit and the second battery unit, and configured to detect state parameters of the first battery unit and the second battery unit, and control the power ranges of input electric energy and output electric energy of the first battery unit and the second battery unit according to the state parameters.

In some embodiments, the task manager is adapted to send a control instruction to the first battery unit and the second battery unit through a task bus, and control the first battery unit or the second battery unit to be activated according to the control instruction to output electric energy in a first power range or in a second power range, where the control instruction corresponds to a different operating state of a load.

In some embodiments, the task manager outputs the control instruction when the electric quantity of the first battery unit is greater than a first threshold, and activates the first battery unit according to the control instruction to provide electric energy to the load.

In some embodiments, the task manager outputs the control instruction when the electric quantity of the first battery unit is less than a second threshold, disables the first battery unit according to the control instruction to stop outputting electric energy, and activates the second battery unit to provide electric energy to the present load.

In some embodiments, the task manager outputs the control instruction when the electric quantity of the first battery unit is less than the first threshold and greater than the second threshold, and activates the first battery unit and the second battery unit according to the control instruction to control both the first battery unit and the second battery unit to provide electric energy to the load, where the first threshold is greater than the second threshold.

In some embodiments, the present disclosure further provides a vehicle including the battery pack or the task manager as described above. Compared with the related art, the battery pack provided in the present disclosure provides electric energy in a different power range by selectively activating the first battery unit or the second battery unit, so as to quickly and accurately provide electric energy in a different power range to a vehicle according to a current operating state, prevent the delayed switching when a battery assembly of the same type and specification outputs electric energy of a different power, and ensure the vehicle to be accurately adapted to different operating conditions.

### BRIEF DESCRIPTION OF THE DRAWINGS

To describe the technical solutions of the embodiments of the present disclosure more clearly, the drawings needed to be used in the embodiments of the present application will be described briefly below. Apparently, the drawings in the following description show some embodiments of the present application. Other drawings can be obtained by a person of ordinary skill in the art from these accompanying drawings without creative efforts.
FIG. 1 is a schematic block diagram of a vehicle provided in an embodiment of the present disclosure;
FIG. 2 is a schematic structural view showing the planar arrangement of the battery pack shown in FIG. 1;
FIG. 3 is a schematic flow chart showing a working process of the battery pack in a vehicle 1 shown in FIG. 2; and
FIG. 4 is a schematic view showing a planar structure of a battery pack provided in a second embodiment of the present disclosure.

### DETAILED DESCRIPTION

To facilitate the understanding of the present disclosure, the present disclosure will be described fully below in conjunction with the drawings. Preferred embodiments of the present disclosure are given in the drawings. However, the present disclosure can be implemented in many different forms, and is not limited to the embodiments described herein. Conversely, these embodiments are provided for thorough and comprehensive understanding of the disclosure of the present disclosure.

The following descriptions of various embodiments are provided to exemplify the specific embodiments of the present disclosure with reference to accompanying drawings. Herein, the numberings for the components, for example, "first ", "second ", and others, are merely used for the purpose of distinguishing the described objects and have no order or technical meaning. The "connection" and "coupling" mentioned in the present disclosure include direct and indirect connection (coupling) unless otherwise specified. The directional terms mentioned in the present disclosure, for example, "upper", "lower", "front", "rear", "left", "right", "inner", "outer", "side" and so on, are only given with reference to the direction of the drawings. Therefore, the directional terms used are to better and more clearly explain and understand the present disclosure, instead of indicating or implying that the device or element referred to needs to have a specific orientation. or be structured or operated in a specific orientation. Therefore, they cannot be construed as limiting on the present disclosure.

In the description of the present disclosure, it is to be noted that unless otherwise clearly specified and defined, the term "mounting", "connection", and "connecting" should be understood in a broad sense. For example, the connection may be a fixed connection, a detachable connection, or an integral connection; or the connection may be a mechanical connection; or the connection may be direct connection, or indirect connection via an intermediate structure; or the connection may be the internal communication of two elements. For those of ordinary skill in the art, specific meanings of the above terms in the present disclosure can be understood according to specific circumstances. Notably, the term "first", "second", and others used in the specification, claims and drawings of the present disclosure are used to distinguish different objects, rather than describe a particular order.

In addition, as used in the present disclosure, the term "include" "may include", "comprise", or "may comprise" indicate the presence of the disclosed corresponding functions, operations, and elements, etc., and do not limit one or more other functions, operations, and elements, etc. In addition, the term "include" or "comprise" indicate the presence of corresponding features, numbers, steps, operations, elements, and components or combinations thereof disclosed in the specification, but do not exclude the presence or addition of one or more other features, numbers, steps, operations, elements, and components or combinations thereof, and are intended to cover a non-exclusive inclusion. In addition, when an embodiment of the present disclosure is described, "can" is used to indicate "one or more embodiments of the present disclosure". Moreover, the term "exemplary" is intended to refer to an example or illustrative description.

Unless otherwise stated, all technical and scientific terms used herein have the same meaning as commonly understood by persons skilled in the art. The terms used in the descriptions of the present disclosure are for the purpose of describing specific embodiments only and not intended to limit the present disclosure.

In a vehicle power system driven by electricity, the battery for energy storage used in electric vehicles is usually formed of multiple individual battery cores connected in series, in which each battery core has the same gravimetric energy density, volumetric energy density, and power density. The battery is combined with a battery management system (BMS), a thermal management system, and others to power the electric vehicles. The source power of the battery assembly required by the electric vehicle has obvious differences under different operating conditions. For example, when an electric vehicle runs smoothly, the power required is 10 to 20 KW; and the power is often as high as 50 to several hundred kilowatts in speedup, slowdown, and braking energy recovery.

For a battery assembly of an electric vehicle, studies show that because the source power required by the electric vehicle is different under different operating conditions, and the battery assembly formed of the same type of battery cores connected in series can obviously provide only one source power, so the source power provided by the battery assembly cannot completely accurately match the demand of the electric vehicle. As a result, the performance of electric vehicles cannot be completely released. Moreover, the battery assembly formed of the same type of battery cores connected in series occupies a large space.

In the present disclosure, a battery assembly formed by combining battery cores having different energy densities is provided and used as a power source for an electric vehicle, so as to effectively meet the power demands of the vehicle under different working conditions. Moreover, the design of spatial structure of each battery pack in the battery assembly can be adaptively adjusted according to the internal space of the vehicle, to effectively solve the problem of large space occupation of a traditional battery pack.

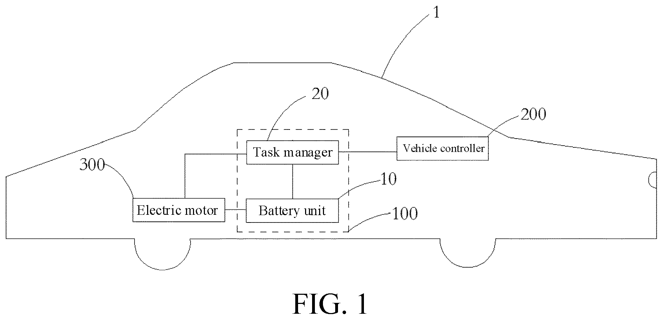

FIG. 1 is a schematic block diagram of a vehicle provided in an embodiment of the present disclosure. As shown in FIG. 1, a vehicle 1 includes a battery pack 100, a vehicle controller 200 and an electric motor 300. The battery pack 100 is electrically connected to the vehicle controller 200 and the electric motor 300, and the battery pack 100 is configured to provide driving electric energy to the electric motor 300. The vehicle controller 200 is configured to collect relevant signals of the battery pack 100, the electric motor 300 and other various functional modules in the vehicle 1, and then adaptively adjust the operating states of the electric motor 300 and the battery pack 100 according to the collected signals, such that the vehicle reaches a good operating state as driven by the electric motor 300. The electric motor 300 performs a corresponding power driving operation under the control of the battery pack 100, so that the vehicle 1 is in different driving states or braking states.

In an exemplary embodiment, the electric motor 300 may be an induction motor, a permanent magnet synchronous motor, switched reluctance motor and other electric motors that can be used in electric vehicles, which is not limited in the present disclosure.

As shown in FIG. 1, the battery pack 100 includes a battery unit 10 and a task manager 20. The battery unit 10 is an energy storage power device, which provides the required electric energy for the normal operation of each functional module or component in the vehicle 1. The task manager 20 is electrically connected to the battery unit 10, the vehicle controller 200 and the electric motor 300, performs signal interaction and transmission, and is configured to detect the state of charge, voltage, current, temperature and others of the battery unit 10. After corresponding calculation, determination, and processing, the task manager 20 is configured to output a control instruction for controlling the charging and discharging of the battery unit 10, and the task manager 20 cooperates with the vehicle controller 200 to jointly control the operating state of the electric motor 300.

The vehicle controller 200 collects relevant parameters of the task manager 20 and the electric motor 300, and sends a corresponding operation instruction to the task manager 20 after corresponding calculation and determination. After receiving the instruction, the task manager 20 controls the operating state of the battery unit 10, and cooperates with the vehicle controller 200 to control the operation of the electric motor 300. The operating state of the battery unit 10 includes the state of charge, voltage, current, temperature, and others of the battery unit 10.

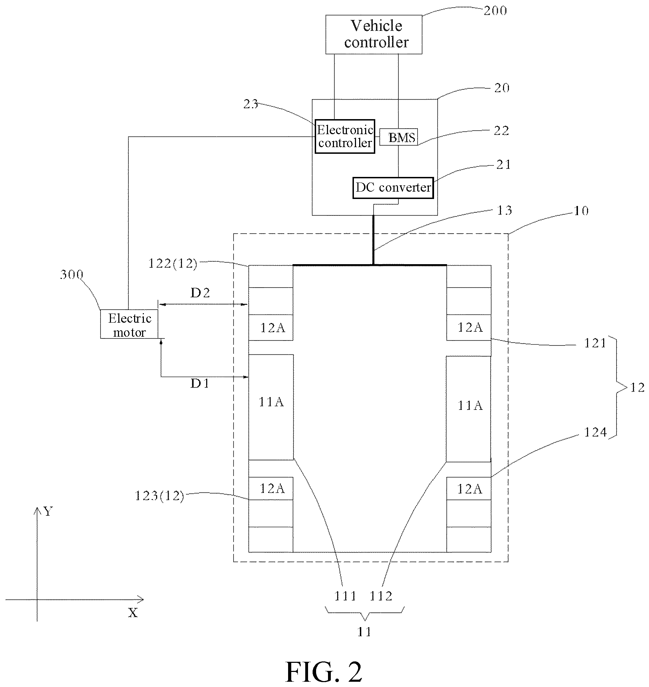

FIG. 2 is a schematic structural view showing the planar arrangement of the battery pack 100 shown in FIG. 1. As shown in FIG. 2, a first battery unit 11 can be provided with N sub-master packs as required by the vehicle, where the power density and energy density of the N sub-master packs can be set to be completely the same or have some differences as desired, which is not limited in the present disclosure. A second battery unit 12 can be provided with M sub-slave packs as required, where the power density and energy density of the M sub-slave packs can be set to be completely the same or have some differences as desired, which is not limited in the present disclosure. N, and M is an integer greater than or equal to 1.

The battery unit 10 includes the first battery unit 11, the second battery unit 12 and a task bus 13. In this embodiment, when N is 2 and M is 4, the first battery unit 11 includes a first sub-master pack 111 and a second sub-master pack 112, the first sub-master pack 111 and the second sub-master pack 112 both include one first battery core 11A, and the first battery core 11A has a first energy density and a first power density, where the first energy density is in a first energy range, and the first power density is in a first power range.

For ease of understanding and description, a coordinate system is established by taking the X-axis direction as a first direction and the Y-axis direction as a second direction, where the first direction X is perpendicular to the second direction Y The first sub-master pack 111 and the second sub-master pack 112 are arranged side by side and spaced by a preset distance along the first direction X. The first battery unit 11 is configured to provide long-lasting electric energy for the electric motor 300 when the vehicle 1 as a load is running stably.

The second battery unit 12 includes a first sub-slave pack 121, a second sub-slave pack 122, a third sub-slave pack 123 and a fourth sub-slave pack 124. The first sub-slave pack 121, the second sub-slave pack 122, the third sub-slave pack 123 and the fourth sub-slave pack 124 each include three second battery cores 12A. The first sub-slave pack 121, the second sub-slave pack 122, the third sub-slave pack 123 and the fourth sub-slave pack 124 are all formed of the three second battery cores 12Aconnected in series. The second battery core 12Ahas a second energy density and a second power density. The second energy density is in a second energy range, and the second power density is in a second power range.

The first sub-slave pack 121 and the second sub-slave pack 122 are arranged side by side and spaced by a preset distance along the first direction X, and arranged at one side of the first battery unit 11 along the second direction Y The third sub-slave pack 123 and the fourth sub-slave pack 124 are arranged side by side and spaced by a preset distance along the first direction X, and arranged at the other side of the first battery unit 11 along the second direction Y

In other words, the first sub-slave pack 121 and the second sub-slave pack 122 are respectively arranged at one outer side of and adjacent to the sub-master packs along the second direction, and the third sub-slave pack 123 and the fourth sub-slave pack 124 are respectively arranged at the other outer side of and adjacent to the sub-master packs along the second direction. The second battery unit 12 is configured to provide the electric motor 300 with electric energy output of instantaneous high power when the vehicle 1 is in the states of speedup, slowdown and braking. Each sub-pack in the first battery unit 11 and the second battery unit 12 is connected in parallel to the task bus 13.

Alternatively, in other embodiments of the present disclosure, the number of the sub-master pack in the first battery unit 11, the number of the first battery core 11A in the sub-master pack, the number of the sub-slave pack in the second battery unit 12, and the number of the second battery core 12A in the sub-slave pack can be adjusted according to the actual demand of the vehicle 1, and are not limited in the present disclosure. The capacity of the second battery core is 30% of the capacity of the first battery core.

The first power range is 10-20 KW, the second power range is 50-100 KW, the first energy range is 50-100 KWh, and the second energy range is 10-30KWh. The first and second power ranges and the first and second energy ranges of the first battery core 11A and the second battery core 12A can be set within the aforementioned numerical ranges at the same time; or only the first and second power ranges are set in the corresponding numerical ranges; or only the first and second energy ranges are set in the corresponding numerical ranges. They can be set according to the actual needs of the vehicle 1, and are not limited in the present disclosure.

Further, the second energy range is about 30% of the first energy range, and the energy density of the second battery unit 12 is about 30% of the energy density of the first battery unit 11, where the energy density is the energy contained in one unit volume. The first power density means a discharging ability of 5-10C in 5 sec, and the second power density means a discharging ability of 10C (charging and discharging current/rated capacity) or higher in 5 sec. That is, the first battery unit 11 has a discharging ability of 5-10C in 5 sec, and the second battery unit 12 has a discharging ability of 10C or higher in 5 sec.

By setting the composition and parameters of the battery core in the first battery unit 11 and the second battery unit 12, the first battery unit 11 and the second battery unit 12 are effectively enabled to cooperate for electric energy output. For different loads and different power demands, the task manager 20 can accurately control the electric energy output states of the first battery unit 11 and the second battery unit 12. Moreover, with accurate parameter settings, the production consumption of the battery pack can be accurately calculated and the production cost of the battery pack can be reasonably reduced.

At least two sub-slave packs in the second battery unit 12 output electric energy of different powers in the second power range. Therefore, different sub-slave packs can be combined and accurately and quickly switched to output electric energy of different powers in response to the operating conditions of speedup, slowdown, or braking of the vehicle 1 requiring large instantaneous output powers. For example, For example, the first sub-slave pack 121 and the second sub-slave pack 122 cooperate to output electric energy of a required power in the second power range in the operating condition of speedup, the third sub-slave pack 123 outputs electric energy of a required power in the second power range in the operating condition of slowdown, and the fourth sub-slave pack 124 outputs electric energy of a required power in the second power range in the operating condition of braking.

Alternatively, in other embodiments of the present disclosure, the first sub-slave pack 121, the second sub-slave pack 122, the third sub-slave pack 123 and the fourth sub-slave pack 124 can be combined in different ways according to actual needs, so as to output electric energy of high instantaneous power in the second power range. The present disclosure is not limited to the above example.

In an exemplary embodiment, the battery core material in the first battery unit 11 and the second battery unit 12 can be a lead acid battery, a lithium ion battery, a nickel hydrogen battery, a lead crystal battery and a zinc air battery as required by the vehicle 1, which is not limited in the embodiments of the present disclosure.

In an exemplary embodiment, the first battery unit 11 has a high energy density, to provide a long mile range for the vehicle 1. The second battery unit 12 has a high power density, to provide a high instantaneous power output when the vehicle 1 is braked, speed up or in other operating conditions. By combining the high energy density of the first battery unit 11 with the high power density of the second battery unit 12 in the battery unit 10, electric energy and corresponding power demand can be provided for the electric motor 300 when the vehicle 1 is in different operating conditions such as speedup, braking and smooth driving. Therefore, the battery pack 100 can output electric energy of different powers by means of sub-packs with different energy densities and power densities, so as to meet the power and electric energy demand of vehicle 1 under different operating conditions.

In an exemplary embodiment, the rate performance of the first battery unit 11 at 5C is less than 70%, the rate performance of the second battery unit 12 at 5C is greater than 70%, and the power density of the first battery unit 11 and the power density of the second battery unit have a certain proportional relationship. In some embodiments, the average specific power of the second battery unit 12 is 1.5 times the average specific power of the first battery unit 11. The specific power is the ratio of the maximum power of the electric motor 300 to the total weight of the vehicle 1, unit W/kg. The average specific power is obtained as follows. At room temperature, a battery in 100% state of charge (SOC) is discharged at a current of 1C for 30 min and then discharged at a preset maximum discharging current for 10s, to obtain a 10-sec discharging specific power. After standing for 30 min, the battery is charged at a preset maximum charging current for 10, to obtain a 10-sec charging specific power. The 10-sec discharging specific power and the 10-sec charging specific power are averaged, to obtain the average specific power.

Alternatively, in other embodiments of the present disclosure, when N is 1 and M is 2, that is, the first battery unit 11 in the battery pack 10 includes one sub-master pack, and the second battery unit 12 includes two sub-slave pack, the sub-master pack in the first battery unit 11 has an energy density of 60 KWh and an upper charging and discharging ability, that is, power range, of 0.5 - 1C. The sub-slave packs of the second battery unit 12 are respectively a 30 KWh sub-slave pack having an upper charging and discharging ability of 3C and a 10 KWh sub-slave pack having an upper charging and discharging ability of 10C. The total electric quantity of the battery pack 10 is 100 KWh, and the power of continuous output is 60 * 1 + 30 * 3 + 10 * 10 = 250 KW, which is higher than the upper limit of continuous power of a battery pack having the same battery core material. Therefore, the battery pack 100 provided in the present disclosure can meet the requirement of the vehicle 1 for instantaneous high-power electric energy output while the vehicle 1 is ensured to have a large mile range. That is, it can flexibly meet the power demands of the vehicle 1 under different operating conditions.

In an exemplary embodiment, the charging time of the battery unit 10 is much faster than that of the battery pack with a single energy parameter. The battery unit 10 can be charged with 10KWh + 30% * 30KWh + 10% * 60 KWh = 25 KWh in 6 min, However, for a 100 KWh battery pack with a single energy parameter and a fast charging ability at 1.5C, only an electric quantity of 0.15* 100KWh = 15 KWh can be charged. Therefore, the battery pack 100 of the present disclosure has faster instantaneous charging ability than the traditional battery pack.

Further, referring to FIGs. 1 and 2, in this embodiment, the task manager 20 specifically a DC converter 21, a BMS 22 and an electronic controller 23. The DC converter 21 is electrically connected to the task bus 13, and the DC converter 21 is configured to convert a high-voltage direct current outputted from the first battery unit 11 and the second battery unit 12 into a low-voltage direct current and supply it to low-voltage electrical appliances in the whole vehicle.

BMS 22 is electrically connected to the battery unit 10 and the vehicle controller 200 for realize signal transmission, and configured to detect the state of charge, temperature, voltage and other parameters of each sub-pack in the first battery unit 11 and the second battery unit 12 in real time. Then BMS 22 performs calculation, determination and processing on the detected parameters, and sends the processing result to the vehicle controller 200. BMS 22 controls the first battery unit 11 and the second battery unit 12 to perform a corresponding self-protection operation according to the processing result, such as overcharge protection, overdischarge protection, and over-temperature protection, etc. BMS 22 controls, through the DC converter 21 and the task bus13, each sub-pack in the first battery unit 11 and the second battery unit 12 to undergo selective charging and discharging, and distributes the electric quantity of the first battery unit 11 and the second battery unit 12.

The electronic controller 23 is electrically connected to the battery unit 10, BMS 22, the vehicle controller 200 and the electric motor 300 for signal transmission, and configured to receive an instruction signal from the vehicle controller 200 and a battery detection signal transmitted from BMS 22, process the received signal, and control the power of electrical energy outputted from the battery unit 10 to the electric motor 300, so as to realize the control of the operation of the electric motor 300.

In an exemplary embodiment, the DC converter 21 is a bidirectional DC-DC converter that can control the current to flow bidirectionally. Since the task bus 13 is electrically connected to the first sub-master pack 111 and the second sub-master pack 112 in the first battery unit 11 and the first sub-slave pack 121, the second sub-slave pack 122, the third sub-slave pack 123 and the fourth sub-slave pack 124 in the second battery unit 12, the DC converter 21 can accurately control, through the task bus13, the magnetite of electric energy inputted into and outputted from the first sub-master pack 111 and the second sub-master pack 112 in the first battery unit 11 and the first sub-slave pack 121, the second sub-slave pack 122, the third sub-slave pack 123 and the fourth sub-slave pack 124 in the second battery unit 12.

In an exemplary embodiment, when the vehicle 1 is in a task mode requiring large instantaneous output power, such as speedup, slowdown, and braking, the task manager 20 can control the specific power supply mode of the first battery unit 11 and the second battery unit 12 according to the power demand of the vehicle 1 in each task mode. In an exemplary embodiment, the battery pack 100 has at least the following three power supply modes under the control of the task manager 20 when providing electric energy to the vehicle 1:
Power supply mode 1: The electric quantity of the first battery unit 11 is greater than a first threshold, and the vehicle 1 is running at a uniform speed and a low power and has a power demand in the range of 10-20 KW. At this time, the task manager 20 outputs a control instruction through the task bus 13, where the control instruction is only used to activate the first battery unit 11 to provide electric energy to an electric energy driving module such as the motor 300 currently served as a load. In this embodiment, the first threshold can be set to 70% of the total electric quantity of the first battery unit 11. Definitely, the first threshold can be adjusted according to the actual demand, such as 60%-95% of the total electric quantity, which is not limited herein.

Power supply mode 2: The electric quantity of the first battery unit 11 is lower than a second threshold, and the vehicle 1 is running at a low power and has a power demand in the range of 10-20 KW. At this time, the task manager 20 outputs a control instruction through the task bus 13, where the control instruction is used to disable the first battery unit 11 to stop outputting electric energy, and activate the second battery unit 12, so that the second battery unit 12 can provide electric energy to an electric energy driving module such as the electric motor 300 currently served as a load, In this embodiment, the second threshold can be set to 20% of the total electric quantity of the first battery unit 11. Definitely, the second threshold can be adjusted according to the actual demand, such as 10%-30% of the total electric quantity, which is not limited herein.

Power supply mode 3: The electric quantity of the first battery unit 11 is less than the first threshold and greater than the second threshold, that is, the remaining electric quantity of the first battery unit is between 20% and 70%, and the vehicle 1 is running at a high power and has a power demand in the range of 50-100 KW. At this time, the first battery unit 11 cannot meet the high-power demand in the current operating condition alone. The task manager 20 outputs a control instruction through the task bus 13, where the control instruction is used to activate both the first battery unit 11 and the second battery unit 12, so that both the first battery unit 11 and the second battery unit 12 can provide electric energy to an electric energy driving module such as the electric motor 300 currently served as a load, so as to meet the high power demand of the current load such as the electric motor in the vehicle 1.

Further, the task manager 20 can also, according to the power demands of the vehicle 1 in various task modes, control each sub-slave pack in the second battery unit 12 to output electric energy of different powers in the second power range. For example, in a speedup task mode of the vehicle 1, the task manager 20 outputs a control instruction, where the control instruction is used to activate the first sub-slave pack 121 and the second sub-slave pack 122 to output electric energy of a corresponding power to the electric motor 300, so as to provide electric energy for the vehicle 1 in the speedup task mode. That is, the instantaneous high-power electric energy output required for the speedup of the vehicle1 is derived entirely from the first sub-slave pack 121 and the second sub-slave pack 122, and no other sub-packs are involved.

The task manager 20 can output a control instruction, where the control instruction is used to activate the third sub-slave pack 123 and the fourth sub-slave pack 124 to provide electric energy to the vehicle 1 in a slowdown and a braking task mode. That is, the high-power output required for the slowdown and braking of the vehicle 1 relies entirely on the third sub-slave pack 123 and the fourth sub-slave pack 124, and no other sub-packs are involved. How to distribute the electric energy output of each sub-pack in a specific task mode can be determined according to the power demand of the vehicle 1, which is not limited in the present disclosure.

In an exemplary embodiment, The task manager 20 is further configured to perform one or more of the following functions: a function of opening or cutting off the connection between various sub-packs in the first battery unit 11 and the second battery unit 12;a function of automatic equalizing the charging and discharging of various sub-pack to each other in the first battery unit 11 and the second battery unit 12; a function of dynamically and quickly (response time < 1 s) switching and adjusting the output currents of various sub-packs in the first battery unit 11 and the second battery unit 12; a function of dynamically adjusting, according to specific operating conditions, such as speedup, power recovery, smooth driving, and others, the loads and input and output currents of various sub-packs in the first battery unit 11 and the second battery unit 12; and a function of controlling the order of charging of various sub-packs in the first battery unit 11 and the second battery unit 12 and the supplement of the current to various sub-packs according to a certain ratio.

In this embodiment, as shown in FIGs. 1 to 2, the vehicle controller 200 is specifically electrically connected to the DC converter 21, BMS 22 and the electronic controller 23 for signal transmission, and configured to collect signals from the DC converter 21, BMS 22, the electronic controller 23 and other components in the vehicle. Then the vehicle controller 200 performs comprehensive calculation and determination, and gives corresponding instructions to the DC converter 21, BMS 22 and the electronic controller 23. By controlling the DC converter 21, BMS 22 and the electronic controller 23, and by controlling the charging and discharging of the battery unit 10, the operating power of electric motor 300 is adjusted, so that the DC converter 21, BMS 22, the electronic controller 23 and other components in the vehicle 1 can coordinate with each other to adjust the operating state of the vehicle 1, and allow the vehicle 1 to reach a good operating state.

Under the control of the task manager 20, the electric energy output from the first battery unit 11 and the second battery unit 12 is accurately controlled. The task manager 20 can quickly and flexibly adjust the electric energy output from the first battery unit 11 and the second battery unit 12 according to a power demand of a present load, so as to meet the power demand of the present load.

The battery management system 20 can efficiently monitor the electric quantities and operating states of the first battery unit 11 and the second battery unit 12 in real time, and control the power ranges of input electric energy and output electric energy of the first battery unit 11 and the second battery unit 12 according to these parameters, so as to maintain a good output state and continuously output electric energy

The task manager 20 is electrically connected to the first battery unit 11 and the second battery unit 12 through the task bus 13, such that the control instruction from the task manager 20 can be quickly transmitted to the first battery unit 11 and the second battery unit 12. In this way, the response time of the first battery unit 11 and the second battery unit 12 is effectively reduced, and the first battery unit 11 and the second battery unit 12 are enabled to provide the required electric energy to the present load at an extremely high speed.

The first battery unit 11 and the second battery unit 12 cooperate with each other to form different power supply modes. The electric energy output from the first battery unit 11 and the second battery unit 12 is properly controlled. By setting the thresholds of electric quantity, the first battery unit 11 and the second battery unit 12 can achieve different combinations of electric energy outputs, such that the first battery unit 11 and the second battery unit 12 can cooperate efficiently with respect to different loads under the control of the task manager 20.

In the battery unit 10, the positions of the first battery unit 11 and the second battery unit 12 are arranged following a rule that the battery pack with a high power density is located at a position close to the electric motor 300, and a sub-pack with a low power density is located at a position farther away from the motor 300 than the battery pack with a high power density. In this embodiment, the first battery unit 11 is spaced apart from the electric motor 300 by a first distance D1, and the second battery unit 12 is spaced apart from the electric motor 300 by a second distance D2, where D1 is greater than D2. Therefore, the second battery unit 12 is located at a position closer to the electric motor 300 than the first battery unit 11, so that the second battery unit 12 has a shorter current transmission path to the motor 300.

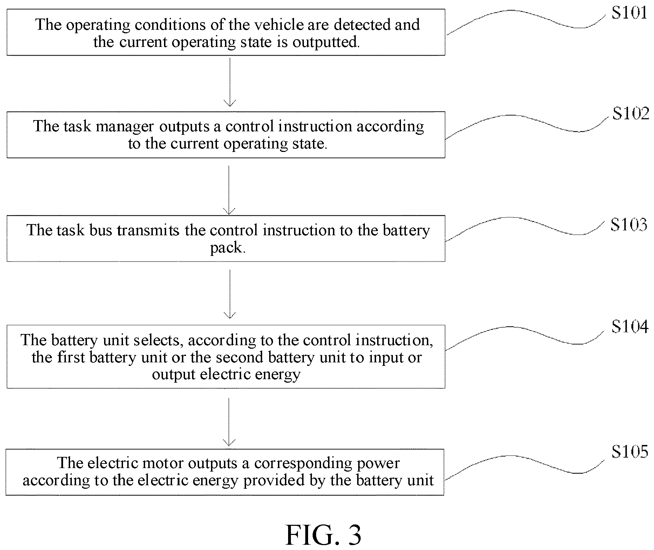

FIG. 3 is a schematic flow chart showing a working process of the battery pack 100 in the vehicle 1 shown in FIG. 2. As shown in FIG. 3, the specific working steps are as follows:
Step S101: The operating conditions of the vehicle 1 are detected and the current operating state is outputted. The operating conditions of the vehicle 1 detected include an instruction inputted by a user and parameters autonomously detected by a detection device such as a sensor. Relevant instructions inputted by a user include operating instructions, such as braking, speedup, switching on and off the air conditioner, and others.
Step S102: The task manager outputs a control instruction according to the current operating state. In some embodiments, after the task manager 20 receives the current operating state of the vehicle 1, BMS 22 processes and determines the working state, and then sends the processing result to the DC converter 21 and the electronic controller 23 in the task manager 20. The DC converter 21 converts, according to the processing result, a high-voltage direct current outputted from the battery unit 10 into a low-voltage direct current and supplies it to low-voltage electrical appliances in the whole vehicle. The electronic controller 23 controls the operation of the electric motor 300 according to the instruction.
Step S103: The task bus 13 transmits the control instruction to the battery pack 10. After the task manager 20 sends the control instruction, the control instruction is transmitted through the task bus 13 to the first battery unit 11 and the second battery unit 12 of the battery unit 10 in the battery pack 100.
Step S104: the battery unit 10 selects, according to the control instruction, the first battery unit 11 or the second battery unit 12 to input or output electric energy. In some embodiments, the first battery unit 11 or the second battery unit 12 in the battery unit 10 is activated according to the control instruction, and cooperates with the DC converter 21 to input or output electric energy of a corresponding power.
Step S105: The electric motor 300 outputs a corresponding power according to the electric energy provided by the battery unit 10. The electric motor 300 operates as driven by the electric energy output of corresponding power from the battery unit 10 cooperating with the electronic controller 23 in the task manager 20 according to the control instruction.

As shown in FIGs. 1 to 3, in the battery pack 100, by accurately identifying the current operating condition of the vehicle 1, BMS 22 can accurately control, through the DC converter 21 and the task bus 13, the current input and output states of the first sub-master pack 111 and the second sub-master pack 112 in the first battery unit 11 and the first sub-slave pack 121, the second sub-slave pack 122, the third sub-slave pack 123 and the fourth sub-slave pack 124 in the second battery unit 12. That is, according to the current operating condition, the first battery unit 11 or the second battery unit 12 can be accurately selected and activated to provide electric energy in a different power range. Meanwhile, the automatic equalization and self-heating of the battery pack 10 are achieved. By identifying the current high-power operating condition of the vehicle 1, different sub-slave packs in the second battery unit can be accurately controlled to be combined, to meet the requirements of the vehicle 1 for different high-power electric energy outputs. Moreover, BMS 22 monitors the charge of state, current, voltage, temperature and others of the first sub-master pack 111 and the second sub-master pack 112 in the first battery unit 11 and the first sub-slave pack 121, the second sub-slave pack 122, the third sub-slave pack 123 and the fourth sub-slave pack 124 in the second battery unit 12 in real time, and communicates with the electronic controller 23 and the vehicle controller 200 in real time, so as to transmit the state of the battery unit 10 in the form of signals to the electronic controller 23 and the vehicle controller 200.

Further, after receiving the signals transmitted from BMS 22, the electronic controller 23 performs analysis and determination, and then correspondingly controls the electric motor 300. After collecting relevant parameters and signals from BMS 22, the electronic controller 23 and other components in the vehicle 1, the vehicle controller 200 performs comprehensive calculation, calculation and processing, and gives corresponding adjustment control instructions to BMS 22, the electronic controller 23 and others components in the vehicle 1, to enable the vehicle 1 to reach a good operating state.

In an exemplary embodiment, the battery pack 100 can be used in both pure electric vehicles and hybrid vehicles. The battery pack architecture when used in pure electric vehicles can be a structure shown in FIG. 2, and The battery pack structure when used in hybrid vehicles needs to be adjusted adaptively, but the internal control principle is not changed.

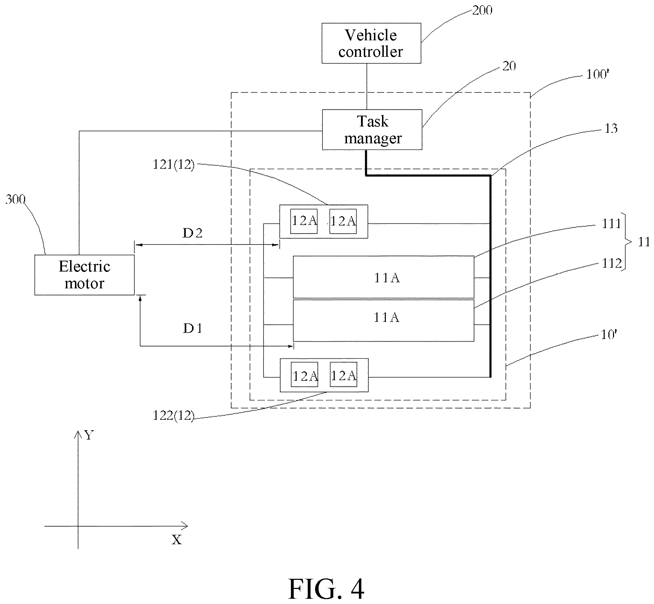

FIG. 4 is a schematic view showing a planar structure of a battery pack 100' provided in a second embodiment of the present disclosure. As shown in FIG. 4, the battery pack 100' is similar to the battery unit 10 shown in FIG. 2, except for the pattern of arrangement of the first battery unit 11 and the second battery unit 12 in the battery unit 10'.

In this embodiment, when N is 2 and M is 2, the first battery unit 11 includes a first sub-master pack 111 and a second sub-master pack 112, the first sub-master pack 111 and the second sub-master pack 112 respectively include one first battery core 11A, the first battery core 11 A has a first energy density and a first power density, the first energy density is in a first energy range, and the first power density is in a first power range. Taking the X-axis direction as a first direction and the Y-axis direction as a second direction, the first sub-master pack 111 and the second sub-master pack 112 are adjacent and arranged side by side at a middle position of the battery unit 10 along the second direction.

The second battery unit 12 includes a first sub-slave pack 121 and a second sub-slave pack 122. The first sub-slave pack 121 and the second sub-slave pack 122 both include two second battery cores 12A, and both the first sub-slave pack 121 and the second sub-slave pack 122 are formed by connecting two second battery cores 12Ain series. The second battery core 12Ahas a second energy density and a second power density. The second energy density is in a second energy range, and the second power density is in a second power range. The first sub-slave pack 121 and the second sub-slave pack 122 are arranged side by side at two sides of the first battery unit 11 and spaced apart from the first battery unit by a preset distance in the second direction. In other words, two sub-slave packs are respectively arranged at the outer sides of and adjacent to the two sub-master packs along the second direction. The first battery unit 11 and the second battery unit 12 are connected in parallel to the task bus13.

When the fuel quantity of the hybrid vehicle 1 is insufficient or the hybrid vehicle 1 is switched to the electric powered mode, the battery unit 10' provides sufficient electric energy for the electric motor 300, to save energy for the vehicle and ensure the normal running of the vehicle. The specific working principle and mode of the first battery unit 11 and the second battery unit 12 in the battery unit 10' are the same as those of the battery unit 10 shown in FIGs. 1-2, and will not be repeated here again.

In an exemplary embodiment, the battery unit 10 designed in the present disclosure is formed of several types of battery cores in a pattern of combination arrangement that can be adaptively adjusted according to the spatial allocation, thus greatly saving the space occupation rate of the battery pack. In addition, dozens of product models of battery cores are not required in the battery pack of the present disclosure. Most of the energy and power demands from the battery pack can be met by only several types, thus significantly enhancing the continuous production capacity of a battery core production line, and reducing the production cost.

It should be understood that the application of the present disclosure is not limited to the examples give above. Modifications and changes can be made by those skilled in the art in accordance with the above description, which are intended to be contemplated in the protection scope of the appended claims.

## Claims

1. A battery pack (100), comprising:
a first battery unit (11), the first battery unit (11) being configured to output electric energy in a first power range; and
a second battery unit (12), the second battery unit (12) being configured to output electric energy in a second power range,
the second power range being higher than the first power range, and the first battery unit (11) and the second battery unit (12) being adapted to be controlled by a task manager (20) to respectively respond to a different operating state of a load and provide electric energy required to the load.

2. The battery pack (100) according to claim 1, wherein
the first battery unit (11) and the second battery unit (12) are adapted to be electrically connected to a battery management system in the task manager (20), the battery management system detects state parameters of the first battery unit (11) and the second battery unit (12), and controls power ranges of input electric energy and output electric energy of the first battery unit (11) and the second battery unit (12) according to the state parameters.

3. The battery pack (100) according to claim 1 or 2,
further comprising a task bus (13), wherein the first battery unit (11) and the second battery unit (12) are connected in parallel to the task bus (13), the task bus (13) is configured to receive a control instruction from the task manager (20) and transmit the control instruction to the first battery unit (11) and the second battery unit (12), the first battery unit (11) or the second battery unit (12) is adapted to be activated and output electric energy in the first power range or the second power range after receiving the control instruction, and the control instruction corresponds to a different operating state of the load.

4. The battery pack (100) according to claim 3, wherein
when the electric quantity of the first battery unit (11) is greater than a first threshold, the first battery unit (11) is adapted to receive the control instruction and be activated, to provide electric energy to the load.

5. The battery pack (100) according to claim 3 or 4, wherein
when the electric quantity of the first battery unit (11) is lower than a second threshold, the first battery unit (11) receives the control instruction, and is disabled to stop outputting electric energy; and the second battery unit (12) is activated to provide electric energy to the present load.

6. The battery pack (100) according to any one of claims 3 to 5, wherein
when the electric quantity of the first battery unit (11) is less than the first threshold and greater than the second threshold, both the first battery unit (11) and the second battery unit (12) receive the control instruction and are activated, and both the first battery unit (11) and the second battery unit (12) provide electric energy to the load, where the first threshold is greater than the second threshold.

7. The battery pack (100) according to any one of claims 1 to 6, wherein
the first battery unit (11) comprises at least one sub-master pack, the sub-master pack comprises at least one first battery core (11A), the first battery core (11A) has a first energy density and a first power density,
the second battery unit (12) comprises at least one sub-slave pack, the sub-slave pack comprises at least one second battery core (12A), the second battery core (12A) has a second energy density and a second power density,
the first energy density is greater than the second energy density, and the first power density is less than the second power density.

8. The battery pack (100) according to claim 7, wherein
the first power range is 10-20 KW, and the second power range is 50-100 KW; or
the first energy range is 50-100 KWh, and the second energy range is 10-30 KWh.

9. The battery pack (100) according to claim 7 or 8, wherein
the capacity of the second battery core in the second battery unit (12) is 30% of the capacity of the first battery core in the first battery unit (11), and
the specific power of the second battery unit (12) is 1.5 times the specific power of the first battery unit (11).

10. A task manager (20),
the task manager (20) being configured to control a first battery unit (11) and a second battery unit (12) in a battery pack (100) to respectively respond to a different operating state of a load, and control the first battery unit (11) and the second battery unit (12) to provide the electric energy required to the load.

11. The task manager (20) according to claim 10,
the task manager (20) comprising a battery management system, the battery management system being adapted to be electrically connected to the first battery unit (11) and the second battery unit (12), and configured to detect state parameters of the first battery unit (11) and the second battery unit (12), and control the power ranges of input electric energy and output electric energy of the first battery unit (11) and the second battery unit (12) according to the state parameters.

12. The task manager (20) according to claim 10 or 11, wherein
the task manager (20) is adapted to send a control instruction to the first battery unit (11) and the second battery unit (12) through a task bus (13), and control the first battery unit (11) or the second battery unit (12) to be activated according to the control instruction to output electric energy in a first power range or in a second power range, where the control instruction corresponds to a different operating state of the load.

13. The task manager (20) according to claim 12, wherein
the task manager (20) is used for outputting the control instruction when the electric quantity of the first battery unit (11) is greater than a first threshold, and is used for activating the first battery unit (11) according to the control instruction to provide electric energy to the load.

14. The task manager (20) according to claim 12 or 13, wherein
the task manager (20) outputs the control instruction when the electric quantity of the first battery unit (11) is less than a second threshold, disables the first battery unit (11) according to the control instruction to stop outputting electric energy, and activates the second battery unit (12) to provide electric energy to the present load.

15. The task manager (20) according to any one of claims 12 to 14, wherein
the task manager (20) outputs the control instruction when the electric quantity of the first battery unit (11) is less than the first threshold and greater than the second threshold, and activates the first battery unit (11) and the second battery unit (12) according to the control instruction to control both the first battery unit (11) and the second battery unit (12) to provide electric energy to the load, where the first threshold is greater than the second threshold.

16. A vehicle (1), comprising: a battery pack (100) according to any one of claims 1 to 9 or a task manager (20) according to any one of claims 10 to 15.
